# EUROPEAN PATENT SPECIFICATION

(11) **EP 1 424 810 B1**
(45) Date of publication and mention of the grant of the patent: **22.08.2007**
(21) Application number: 02386016.6
(22) Date of filing: 29.11.2002
(51) Int. Cl.: H04L 12/28, H04L 12/56, H04Q 7/38

(54) **A communication system and method of authentication therefore**
Kommunikationssystem und Methode zur Authentifizierung dafür
Système de communication et méthode d'authentification pour ceci

(43) Date of publication of application: 02.06.2004
(73) Proprietor: MOTOROLA, INC., Schaumburg, IL 60196 (US)
(72) Inventor: Salkintzis, Apostolis, 153 41 Athens (GR)
(74) Representative: Jepsen, René Pihl

(56) References cited:
- WO-A-01/99441
- WO-A-02/103970
- "Digital cellular telecommunications system (phase 2+) (GSM);Universal Mobile Telecommunications Systems (UMTS); Mobile radio interface layer 3 specification. Core Network protocols - Stage 3 (3G ts 24.008 version 3.2.1 Release 1999)" ETSI TS 124 008 V3.2.1, XX, XX, 2000, pages 1-498, XP002182676
- BLUNK L, VOLLBRECHT J: "PPP Extensible Authentication Protocol (EAP)" RFC 2284, 1 March 1998 (1998-03-01), pages 1-15, XP002239395

## Description

### Field of the invention

The invention relates to a communication system and method of authentication of a GPRS communication unit therefor and in particular to authentication of a dual-mode communication unit through a local network access point.

### Background of the Invention

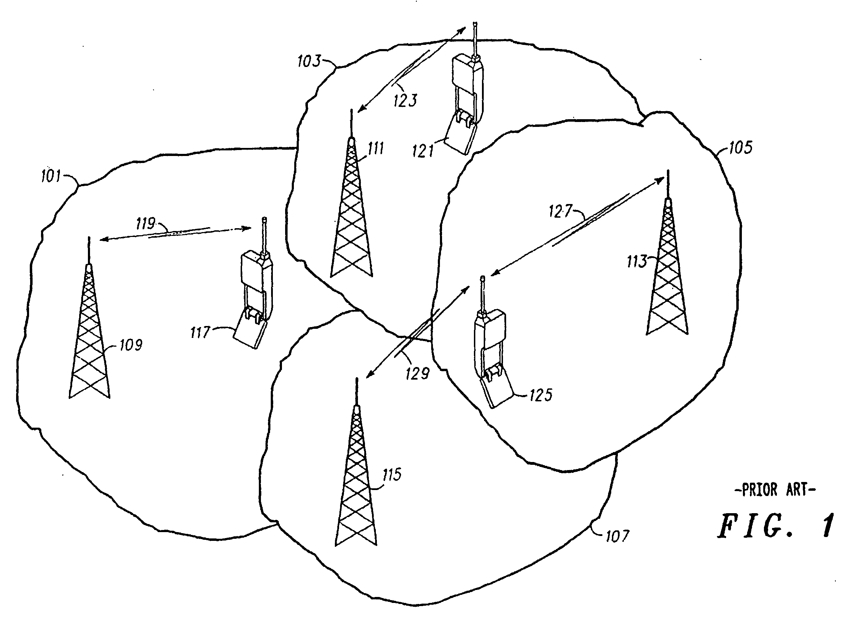

FIG. 1 illustrates the principle of a conventional cellular communication system 100 in accordance with prior art. A typical cellular communication system is the Global System for Mobile communication (GSM). A geographical region is divided into a number of cells 101, 103, 105, 107 each of which is served by base station 109, 111, 113, 115. The base stations are interconnected by a fixed network, which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115 it enters a region of overlapping coverage of the two base stations 111 and 113 and within this overlap region it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

A very important factor in a communication system is the quality of service that a user is provided with. In traditional communication systems, which were strongly focussed on the service of providing speech services, such quality of service parameters mainly related to the speech quality and probabilities of setting up and maintaining calls. However, in the further development of GSM and in related communication systems such as General Packet Radio Service (GPRS), an increased variety of services are offered and envisaged.

Specifically, a traditional GSM communication system uses connection based services where a permanent connection is setup between the two parties of a call. A connection based service is well suited for applications where data is communicated continuously. However, as the connection is permanent for the duration of the call, it will be maintained even when the parties of a call are not transmitting data. A connection based protocol is thus highly inefficient for data of a bursty nature. One example of such a data service is an Internet service, where data is only required during download of a new page. A more efficient protocol for communicating bursty data is a packet data protocol where one block or packet of data is transmitted at the time. Each packet is routed to the destination independently of other packets. Also the connection over the air interface is not continuously maintained between the mobile station and the base station, but rather is typically set up for each new packet. For this purpose, the GSM communication system has been enhanced with the GPRS packet data protocol. Further information on GPRS can be found in "General Packet Radio Service in GSM", Jian Cai and David J. Goodman, IEEE Communications Magazine, Oct 1997, pp. 122-131".

Furthermore, in recent years there has been a significantly increased interest in Wireless Local Area Networks (WLANs). Specifically, WLANs providing wireless data network services have been introduced in many regions and are expected to become increasingly prevalent in the future. The increased prevalence of WLANs has been aided by the emergence of different WLAN standards allowing for standardised equipment to be developed, thereby reducing cost and increasing the interoperability between WLAN systems. For example, different WLAN standards have been developed by the Institute of Electrical and Electronic Engineers. One example of this is the WLAN standard IEEE 802.11b which provides for a maximum data rate of 11 Mbps and ranges between communication units of typically up to 100meters.

An example of an integrated packet radio communication system is provided in Patent Cooperation Treaty patent application WO01/99441. The integrated system is formed of portions of a GPRS system as well as portions of a WLAN system.

To some extent the services provided by WLANs and cellular communication systems may overlap, and there has accordingly in recent years been significant focus on providing interoperability between WLANs and cellular communication systems. Specifically, most WLANs are based on packet data communication and are therefore specifically suited for interoperation with GPRS cellular communication systems.

However, interoperability provides many different problems associated with aligning procedures between the different communication systems. One important area is authentication of communication units. The authentication systems for WLANs and GPRS systems are different, and therefore WLANs that additionally may interoperate with GPRS services conventionally implement specific functionality for authentication of GPRS communication units. However, this is an inefficient approach as it for example may require additional functionality thereby increasing complexity and cost of the WLAN equipment. It may furthermore prevent equipment that has not been developed for GPRS interaction to provide GPRS associated services. It also requires a strong coordination of network management between the GPRS system and the WLAN system.

Hence, an improved system for authenticating a GPRS communication unit would be advantageous.

### Summary of the Invention

Accordingly, the Invention seeks to mitigate, alleviate or eliminate one or more of the above mentioned disadvantages singly or in any combination.

According to a first aspect of the invention, there is provided a method of authenticating a GPRS communication unit in accordance with claim 1.

GPRS authentication messages may be any messages associated with authentication of the GPRS communication unit. As such they may include messages directly or indirectly involved with the authentication process including for example mobility management messages and specifically GPRS Mobility Management messages. Preferably, the local network is a Wireless Local Area Network (WLAN) and the GPRS communication unit is a multimode communication unit capable of operating on both the GPRS communication system and the local network. Hence, the invention allows for combining authentication processes of the GPRS communication system and the local network. A standard GPRS authentication process may be performed as the standard GPRS authentication messages may be used. The GPRS authentication may be performed independently of the local network authentication. Hence, with respect to GPRS authentication the local network may simply act as a transport mechanism for GPRS authentication messages. Likewise, the local network authentication may simply disregard the encapsulated GPRS messages. Also, for example, the access point is not required to implement any GPRS authentication but need only support the basic encapsulation protocol. This allows for a simple, low complexity, independent and/or reliable authentication method for GPRS authentication through a local network access point.

According to a second aspect of the invention, there is provided a communication system according to claim 25.

These and other aspects of the invention will be apparent from and elucidated with reference to the embodiment(s) described hereinafter. Specifically, further advantageous features are provided in the dependent claims.

### Brief Description of the Drawings

An embodiment of the invention will be described, by way of example only, with reference to the drawings, in which
FIG. 1 is an illustration of a cellular communication system in accordance with the prior art;
FIG. 2 illustrates a block schematic of a communication system in accordance with an embodiment of the invention;
FIG. 3 illustrates the protocol architecture of network elements in accordance with an embodiment of the invention; and
FIG. 4 illustrates a message exchange for an authentication process in accordance with an embodiment of the invention.

### Description of Preferred Embodiments

The following description focuses on an embodiment of the invention applicable to a communication system comprising a Wireless Local Area Network (WLAN) and in particular to an IEEE 802.11 WLAN. However, it will be appreciated that the invention is not limited to this application but may be applied to many other communication systems and local networks.

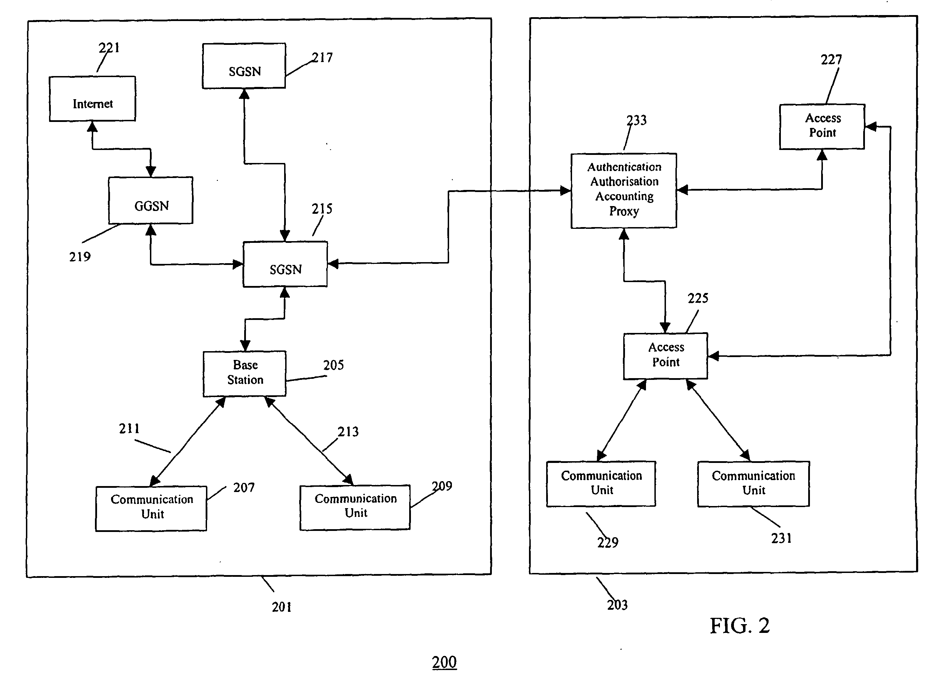

FIG. 2 illustrates a block schematic of a communication system 200 in accordance with an embodiment of the invention. The communication system comprises a cellular GPRS sub-communication system 201 and a WLAN sub-communication system 203.

The GPRS sub-communication system 201 is part of a GSM communication system and comprises a number of base stations. The base stations comprise functionality for communicating with communication units in accordance with the GPRS or GSM communication protocols depending on the nature of the communication unit and the service provided. For clarity and brevity, FIG.2 illustrates only a few functional elements associated with the described GPRS functionality. It will be appreciated that a practical GSM/GPRS communication system will comprise many additional functional elements as is well known in the art.

FIG. 2 illustrates a base station 205 supporting two GPRS communication units 207, 209 over air interface communication links 211, 213. For clarity and brevity, some functionality typically comprised in the Base Station Controller are herein included as part of the base station 205. A communication unit of the communication system may typically be a wireless user equipment, a subscriber unit, a mobile station, a communication terminal, a personal digital assistant, a laptop computer, an embedded communication processor or any communication element communicating over the air interface. The GPRS communication units 207, 209 communicate with the base station 205 in accordance with the GPRS standards.

The base station 205 is through a Base Station Controller (not shown) coupled to a GPRS Support Node (SGSN) 215, which is part of a packet based interconnecting network and comprises functionality for routing the data from the GPRS communication units towards the desired destination. The SGSN 215 further provides mobility and session management functionality for the GPRS services.

The SGSN 215 is coupled to a number of other GPRS Serving Nodes of which two are shown in FIG. 2. The SGSN 215 is coupled to another SGSN 217, which is operable to serve the communication units in another given geographical area. GPRS mobility management signalling is exchanged between the SGSN 215 and the SGSN 217, when for example the GPRS communication unit 207 roams from the area served by SGSN 215 to the area served by SGSN 217.

The SGSN 215 is also coupled to a Gateway GPRS Support Node (GGSN) 219 which is operable to route data in the packet based network. In addition, the GGSN 219 specifically comprises an interworking function interfacing to the Internet 221 and thus provides a gateway between the GPRS sub-communication system 201 and the Internet 221.

The WLAN sub-communication system 203 is an IEEE 802.11 Wireless Local Area Network. The WLAN sub-communication system 203 provides wireless data services to WLAN communication units over relatively short distances. Typically data services may be provided over a range up to around 100m between an access point and a WLAN communication unit. Hence, the WLAN sub-communication system 203 comprises a large number of access points each of which is able to provide wireless data services in a relatively small area.

The access points are interconnected to form a data network which is operable to route data from one access point to another, thereby allowing for data communication between WLAN communication units being served by different access points.

Specifically, FIG. 2 illustrates a first access point 225 coupled to a second access point 227. The first access point serves two communication units 229, 231. In the specific example one of the communication units 229 is a WLAN communication unit which comprises functionality only for communicating on the WLAN sub-communication system 203. However, the second communication unit is a dual-mode communication unit 231 which can communicate according to both the WLAN standard and the GPRS standard.

In the example of FIG. 2 the two access points 225, 227 are connected to an Authentication, Authorisation and Accounting (AAA) proxy 233. The AAA proxy 233 comprises functionality for operating authentication protocols for the WLAN sub-communication system 203. In the example of FIG. 2, the AAA proxy 233 further comprises functionality for communicating with the GPRS sub-communication system 201, and specifically it is coupled to the SGSN 215 of the GPRS sub-communication system 201.

In normal operation, a GPRS communication unit attaching to the GPRS sub-communication system 201 causes a GPRS authentication process to be initiated as is well known in the art. Likewise, if a WLAN communication unit attaches to the WLAN sub-communication system, a WLAN authentication process is initiated as is known in the art. If the authentication process is successful the communication unit is allowed on to the sub-communication system, and it can consequently proceed to use the services provided.

However, for multi-mode communication units capable of communicating according to more than one protocol and thus using more than one sub-communication system, it is advantageous if the different services can be provided regardless of which sub-communication system is used as the access network. Specifically, it is advantageous if the WLAN sub-communication system can be used by a GPRS/WLAN dual-mode communication unit to access GPRS services. Hence, it is advantageous if the dual-mode communication unit 231 can access the access point 225 and accordingly be authenticated by the GPRS sub-communication system 201 through the authentication protocols and procedures used in the WLAN sub-communication system 203. If the authentication is successful, the dual-mode communication unit 231 may proceed to access the GPRS services of the GPRS sub-communication system 201 through the WLAN sub-communication system 203. For example, the dual-mode communication unit 231 may setup GPRS connections with the Internet.

In the preferred embodiment, the authentication of the dual-mode communication unit 231 on the WLAN sub-communication system 203 is performed as for other WLAN communication units. In addition, GPRS authentication is performed by communicating GPRS authentication messages between the dual-mode communication unit 231 and the SGSN 215. The SGSN 215 accordingly performs the prescribed GPRS authentication process as for a communication unit served by the GPRS sub-communication system but uses the GPRS authentication messages which are communicated through the WLAN sub-communication system 203.

The communication of the GPRS authentication messages is performed by encapsulating these messages in authentication messages of the WLAN sub-communication system 203. In the preferred embodiment, the authentication protocol of the WLAN sub-communication system 203 preferably comprises extensible authentication messages, which may include additional messages that encapsulate GPRS signalling messages. The extensible authentication message may thus have the characteristics and comprise the information required for appropriate processing and routing in the WLAN sub-communication system 203, but in addition comprise one or more data elements that are ignored in the WLAN sub-communication system. These data elements may specifically comprise GPRS authentication messages.

The WLAN sub-communication system 203 is furthermore not only capable of routing these authentication messages internally in the WLAN sub-communication system 203, but is also capable of routing them to or from the GPRS sub-communication system 201. Hence, the GPRS sub-communication system 201 may route the extensible authentication message to or from the appropriate SGSN 215. Thereby, a communication link is performed for GPRS authentication messages between the dual-mode communication unit 231 and the appropriate SGSN 215 through the WLAN sub-communication system 203. The GPRS authentication process may be performed in the SGSN 215 and dual-mode communication unit 231 without consideration of the WLAN authentication process.

For communication between the SGSN and the dual-mode communication unit, the SGSN may encapsulate the GPRS authentication message in the extensible authentication message and address the message to the dual-mode communication unit. When received, the dual-mode communication unit may extract the GPRS authentication message from the extensible authentication message and process it in accordance with the GPRS authentication protocol.

For communication between the dual-mode communication unit and the SGSN, the dual-mode communication unit may encapsulate the GPRS authentication message in the extensible authentication message and address the message to the SGSN. When received, the SGSN may extract the GPRS authentication message from the extensible authentication message and process it in accordance with the GPRS authentication protocol.

Hence, in the preferred embodiment the dual mode communication unit attaches to the access point using a local network protocol appropriate for that access point and the associated local network. The authentication of the GPRS aspect of the dual communication unit is then performed by communicating GPRS authentication messages between the GPRS communication unit and a GPRS authentication element through the access point by encapsulation of GPRS authentication messages in the local network authentication messages.

Preferably, the extensible authentication messages are in accordance with the Extensible Authentication Protocol (EAP) specified in Internet Engineering Task Force (IETF) RFC 2284, "PPP Extensible Authentication Protocol". The Extensible Authentication Protocol provides a generic authentication protocol, which can be extended in order to facilitate various authentication methods. This protocol has been adapted in IEEE specification 802.1x as a generic protocol for enabling various authentication methods in WLANs such as IEEE 802.11.

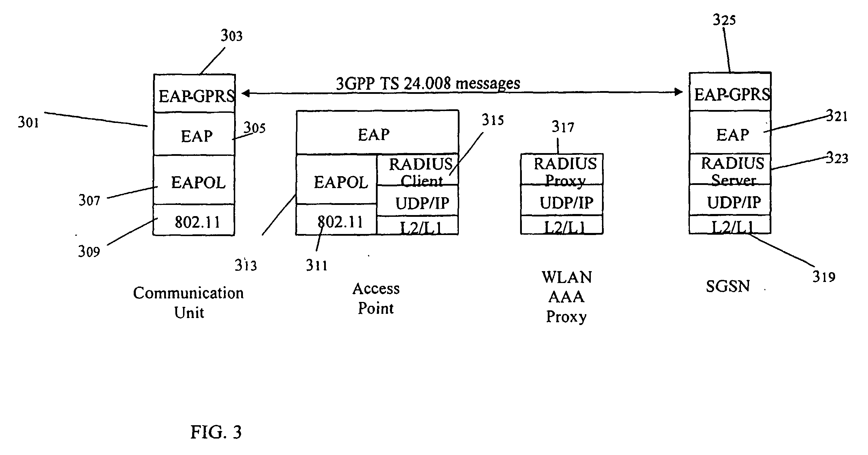

FIG. 3 illustrates the protocol architecture of network elements in accordance with an embodiment of the invention wherein EAP authentication messages are used.

The dual-mode communication unit implements the protocol stack 301 comprising an EAP-GPRS layer 303. This layer provides functionality for encapsulating GPRS messages into EAP messages or for retrieving GPRS messages from encapsulated EAP messages. It thus provides a communication channel for the GPRS messages to the higher layers. These layers may thus perform the GPRS authentication. The EAP-GPRS layer 303 resides on an EAP layer 305 which implements the EAP communication protocol between the dual-mode communication unit and the access point. The EAP layer 305 resides on top of an EAPOL (EAP Over LAN) layer 307 and an IEEE802.11 layer 309 as are well known from the IEEE 802.1x specification.

In the preferred embodiment, the access point implements a protocol stack comprising an EAPOL layer 313 and an 802.11 layer 311 for communicating with the dual-mode communication unit as is known in the art from the IEEE 802.1x specification. In the preferred embodiment, the access point further implements a protocol stack comprising a RADIUS transport layer 315 for communicating with the AAA proxy. The AAA proxy implements a protocol stack 317 using RADIUS transport layer for communicating with the access point as well as the SGSN. The SGSN implements a protocol stack wherein an EAP layer 321 corresponding to the EAP layer 305 of the dual-mode communication unit 231 resides on top of a RADIUS layer 323 which provides the transport layer for the communication with the AAA proxy. An EAP-GPRS layer 325 resides on top of the EAP layer 321. As for the EAP-GPRS layer 303 of the dual-mode communication unit, this layer provides functionality for encapsulating GPRS messages into EAP messages or for retrieving GPRS messages from encapsulated EAP messages. It thus provides a communication channel for the GPRS messages to the higher layers, which perform the GPRS authentication process.

The preferred embodiment thus provides an authentication technique that combines the WLAN and the GPRS specific authentication mechanisms and allows a communication unit to perform a single authentication procedure. Furthermore, the access point does not need to implement any GPRS authentication but only needs to support the basic EAP protocol. Specifically, the preferred embodiment provides an authentication process that converges GPRS and 802.1x authentication mechanisms, and which enables a dual mode communication unit to attach to a GPRS core in the context of 802.1x authentication. No coordination of the different authentication procedures are required except for establishing the encapsulation protocol.

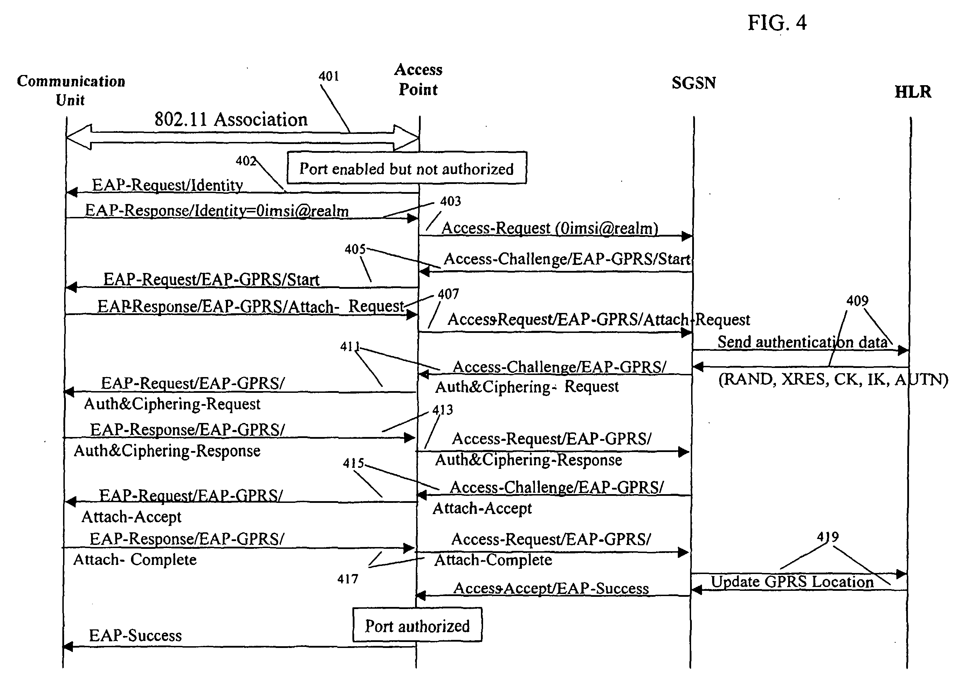

FIG. 4 illustrates a message exchange for an authentication process in accordance with an embodiment of the invention. FIG. 4 illustrates the network elements by vertical lines and message exchanges by horizontal arrows. In the illustrated embodiment, the access point communicates directly with the SGSN without the intervention of an AAA proxy.

Initially, the dual-mode communication unit attaches to the access point using a local network protocol and specifically by performing an association 401 in accordance with the IEEE 802.11 standard. After the dual-mode communication unit is associated with the access point, the 802.1x authentication is initiated. This authentication uses EAP signalling messages.

Consequently, the access point transmits a message 402 requesting an identity from the dual-mode communication unit.

In response, the dual-mode communication unit transmits an identity to the access point using an EAP-Response/Identity message 403. The Response/Identity message 403 includes a GPRS subscriber identity such as the International Mobile Subscriber Identity (IMSI), or the Packet Temporary Mobile Subscriber Identity (P-TMSI) of the subscriber. This message is then relayed to the SGSN, which acts as a normal Authentication, Authorisation and Accounting (AAA) server. Hence, the access point communicates an access message to the GPRS authentication element indicating that the GPRS communication unit has attached to the access point.

Subsequently, a GPRS Authentication Initiation message 405 encapsulated in an EAP message is communicated from the SGSN to the access point and from the access point to the dual-mode communication unit. Thus the SGSN sends an EAP-GPRS/Start command to the dual-mode communication unit thereby initiating the GPRS authentication process.

Subsequently, a GPRS Attach Request message 407 encapsulated in a local network authentication message is communicated from the GPRS communication unit to the access point, and from the access point to the SGSN.

Subsequently, the SGSN retrieves authentication data 409 associated with the dual-mode communication unit from a Home Location Register of the GPRS sub-communication system. The data required and the method of retrieving it is performed as for a normal GPRS authentication for a GPRS communication unit attached to a GPRS base station. Specifically, the data and retrieval of data is in accordance with Technical Specification TS 23.060 of the 3^{rd} Generation Partnership Project (3GPP).

Subsequently, a GPRS Authentication and Ciphering Request message 411 encapsulated in an EAP message is communicated from the SGSN to the access point and from the access point to the dual-mode communication unit. The purpose of this message is to send an authentication challenge to the dual-mode communication unit and verify its credentials.

Subsequently, a GPRS Authentication and Ciphering Response message 413 encapsulated in an EAP message is communicated from the dual-mode communication unit to the access point and from the access point to the SGSN. The purpose of this message is to send an authentication response from the dual-mode communication unit to the SGSN.

Subsequently, if the communication unit is successfully authenticated by the SGSN, a GPRS Attach Accept message 415 encapsulated in an EAP message is communicated from the SGSN to the access point and from the access point to the dual-mode communication unit. The purpose of this message is to indicate to the dual-mode communication unit that it has been successfully authenticated and it is attached to the GPRS service. However, if the communication unit is not successfully authenticated by the SGSN, a GPRS Attach Reject message encapsulated in an EAP message is communicated from the SGSN to the access point and from the access point to the dual-mode communication unit. The purpose of this message is to indicate to the dual-mode communication unit that it has not been successfully authenticated and it could not be attached to the GPRS service.

Subsequently, a GPRS Attach Complete message 417 encapsulated in an EAP message is communicated from the dual-mode communication unit to the access point and from the access point to the SGSN. The purpose of this message is to indicate to the SGSN that the dual-mode communication unit has successfully received the GPRS Attach Accept message along with an embedded temporary identity (P-TMSI) assigned to the dual-mode communication unit. If there is no need to send a GPRS Attach Complete message (in accordance with the rules in 3GPP TS 24.008), the dual-mode communication unit sends an EAP-GPRS/Attach-Accept-Ack message. The purpose of this message is to indicate to the SGSN that the dual-mode communication unit has successfully received the GPRS Attach Accept.

Subsequently, the SGSN communicates with a Home Location Register of the GPRS sub-communication system to perform a GPRS location update 419. The method of performing the GPRS location update is as for a normal GPRS authentication for a GPRS communication unit attached to a GPRS base station. Specifically, the GPRS location update is in accordance with Technical Specification TS 23.060 of the 3^{rd} Generation Partnership Project (3GPP).

Subsequently, an authentication success message, which is preferably an EAP-success message, is communicated from the SGSN to the access point. In response to receiving the authentication success message, the access point authorizes the data port (or association) corresponding to the dual-mode communication unit for GPRS communication. In the preferred embodiment, the access point is only authorised for the dual-mode communication unit if the GPRS authentication is successful.

In the preferred embodiment, the GPRS authentication messages are encapsulated and de-encapsulated at the dual-mode communication unit and the SGSN. However, in other embodiments, the encapsulated messages may only be used for part of the communication path between a communication unit and a GPRS authentication element. For example, encapsulated messages may be used internally in the local network, e.g. the WLAN sub-communication system, to communicate with a GPRS interworking function. The interworking function may provide functionality for communicating with elements of the GPRS sub-communication system using GPRS messages and protocols, and with elements of the local network using encapsulated messages and protocols. Hence, specifically, the interworking function may comprise functionality for encapsulating GPRS authentication messages as well as for retrieving encapsulated GPRS messages.

It is within the contemplation of the invention that the authentication may be performed at any suitable time or in response to any suitable event. Specifically, the authentication may be performed when the dual-mode communication unit performs initial access to the GPRS communication system. Alternatively or additionally the authentication may be performed in association with a GPRS routing area update. For example, when the dual-mode communication unit moves from a GPRS radio coverage area to a WLAN radio coverage area it will preferably handover to the WLAN and perform an authentication as part of a GPRS routing area update procedure.

The invention can be implemented in any suitable form including hardware, software, firmware or any combination of these. However, preferably, the invention is implemented as software running on processors and/or digital signal processors. The elements and components of an embodiment of the invention may be physically, functionally and logically implemented in any suitable way. Indeed the functional modules may be implemented in a single unit, in a plurality of units or as part of other functional units. As such, the invention may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor.

## Claims

1. A method of authenticating a GPRS communication unit (231) on GPRS and local network communication systems (201, 203) through an access point (225) of a local network, the method comprising the step of:
the GPRS communication unit (231) attaching to the access point (225) using a local network protocol; and **characterized by** further comprising the step of:
authenticating the GPRS communication unit (231) with the GPRS network (201) and the local network (203) via a single authentication procedure by communicating GPRS authentication messages between the GPRS communication unit (231) and a GPRS authentication element (215) through the access point (225) by encapsulation of GPRS authentication messages in local network authentication messages.

2. A method of authenticating a GPRS communication unit (231) as claimed in claim 1 further comprising the step of authorising the access port for GPRS communication only if the GPRS communication unit (231) is authenticated by the GPRS authentication element (215).

3. A method of authenticating as claimed in any previous claim wherein the step of authenticating comprises the step of the access point (225) requesting an identity from the GPRS communication unit (231).

4. A method of authenticating as claimed in claim 2 or 3 wherein the step of authenticating comprises the step of the GPRS communication unit (231) transmitting an identity to the access point (225).

5. A method of authenticating as claimed in claim 3 or 4 wherein the identity includes a GPRS subscriber identity.

6. A method of authenticating as claimed in any previous claim wherein the step of authenticating comprises the step of the access point (225) communicating an access message to the GPRS authentication element indicating that the GPRS communication unit (231) has attached to the access point (225).

7. A method of authenticating as claimed in any previous claim wherein the step of authenticating comprises the step of the communicating a GPRS Authentication Initiation message from the GPRS authentication element to the access point (225), and the step of communicating the GPRS Authentication Initiation message encapsulated in a local network authentication message from the access point (225) to the GPRS communication unit (231).

8. A method of authenticating as claimed in any previous claim wherein the step of authenticating comprises the step communicating a GPRS Attach Request message encapsulated in a local network authentication message from the GPRS communication unit (231) to the access point (225), and the step of communicating the GPRS Attach Request message from the access point (225) to the GPRS authentication element (215).

9. A method of authenticating as claimed in any previous claim wherein the step of authenticating comprises the step of the GPRS authentication element (215) retrieving authentication data associated with the GPRS communication unit (231) from a Home Location Register.

10. A method of authenticating as claimed in any previous claim wherein the step of authenticating comprises the step of the communicating a GPRS Authentication and Ciphering Request message from the GPRS authentication element (215) to the access point (225), and the step of communicating the GPRS Authentication and Ciphering Request message encapsulated in a local network authentication message from the access point (225) to the GPRS communication unit (231).

11. A method of authenticating as claimed in any previous claim wherein the step of authenticating comprises the step communicating a GPRS Authentication and Ciphering Response message encapsulated in a local network authentication message from the GPRS communication unit (231) to the access point (225), and the step of communicating the GPRS Authentication and Ciphering Response message from the access point (225) to the GPRS authentication element (215).

12. A method of authenticating as claimed in any previous claim wherein the step of authenticating comprises the step of the communicating a GPRS Attach Accept message from the GPRS authentication element (215) to the access point (225), and the step of communicating the GPRS Attach Accept message encapsulated in a local network authentication message from the access point (225) to the GPRS communication unit (231).

13. A method of authenticating as claimed in any previous claim wherein the step of authenticating comprises the step of communicating a GPRS Attach Complete message encapsulated in a local network authentication message from the GPRS communication unit (231) to the access point (225), and the step of communicating the GPRS Attach Complete message from the access point (225) to the GPRS authentication element (215).

14. A method of authenticating as claimed in any previous claim wherein the step of authenticating comprises the step of the GPRS authentication element (215) communicating with a Home Location Register to perform a GPRS location update.

15. A method of authenticating as claimed in any previous claim wherein the step of authenticating comprises the step of communicating an authentication success message from the GPRS authentication element (215) to the access point, and the step of authorising the access port for GPRS communication for the GPRS communication unit (231) in response to receiving the authentication success message.

16. A method of authenticating as claimed in any previous claim wherein communication of GPRS authentication messages from the GPRS authentication element (215) to the access point (225) are by encapsulating GPRS authentication messages in local network authentication messages.

17. A method of authenticating as claimed in any previous claim wherein the authentication is part of a routing area update.

18. A method of authenticating as claimed in claim 1 wherein the step of authenticating comprises the steps of:
communicating a GPRS Authentication Initiation message from the GPRS authentication element (215) to the access point (225), and the step of communicating the GPRS Authentication Initiation message encapsulated in a local network authentication message from the access point (225) to the GPRS communication unit (231); followed by the step of:
communicating a GPRS Attach Request message encapsulated in a local network authentication message from the GPRS communication unit (231) to the access point (225), and the step of communicating the GPRS Attach Request message from the access point (225) to the GPRS authentication element (215); followed by the step of:
communicating a GPRS Authentication and Ciphering Request message from the GPRS authentication element (215) to the access point (225), and the step of communicating the GPRS Authentication and Ciphering Request message encapsulated in a local network authentication message from the access point (225) to the GPRS communication unit (231); followed by the step of:
communicating a GPRS Authentication and Ciphering Response message encapsulated in a local network authentication message from the GPRS communication unit (231) to the access point (225), and the step of communicating the GPRS Authentication and Ciphering Response message from the access point (225) to the GPRS authentication element (215); followed by the step of:
communicating a GPRS Attach Accept message from the GPRS authentication element (215) to the access point (225), and the step of communicating the GPRS Attach Accept message encapsulated in a local network authentication message from the access point (225) to the GPRS communication unit (231); followed by the step of :
communicating a GPRS Attach Complete message encapsulated in a local network authentication message from the GPRS communication unit (231) to the access point (225), and the step of communicating the GPRS Attach Complete message from the access point (225) to the GPRS authentication element (215); and followed by the step of :
communicating an authentication success message from the GPRS authentication element (215) to the access point (225), and the step of authorising the access port for GPRS communication in response to receiving the authentication success message.

19. A method of authenticating as claimed in any previous claim wherein the local network (203) is a Wireless Local Area Network (WLAN).

20. A method of authenticating as claimed claim 15 wherein the Wireless Local Area Network (WLAN) conforms to the Institute of Electrical and Electronic Engineers standard no. 802.1x.

21. A method of authenticating as claimed in any previous claim wherein the local network authentication messages are extensible authentication messages.

22. A method of authenticating as claimed in any previous claim wherein the local network authentication messages are Extensible Authentication Protocol messages.

23. A method of authenticating as claimed in any previous claim wherein the GPRS authentication element (215) is a Serving GPRS Support Node (SGSN).

24. A method of authenticating as claimed in any previous claim wherein the GPRS communication unit (231) is a dual-mode communication unit operable to communicate in accordance with a GPRS protocol and a local network protocol.

25. A communication system comprising a GPRS communication network (201) and a local network (203), the communication system comprising:
means for a GPRS communication unit (231) to attach to the access point (225) using a local network protocol; and **characterized by** further comprising:
means for combined authenticating of the GPRS communication unit (231) with the local network (203) and the GPRS communication network (201) via a single authentication procedure by communicating GPRS authentication messages between the GPRS communication unit (231) and a GPRS authentication element (215) through the access point (225) by encapsulation of GPRS authentication messages in local network authentication messages.

## Patentansprüche

1. Verfahren zur Authentisierung eines GPRS-Kommunikationsgerätes (231) auf GPRS- und lokalen Netzwerk-Kommunikationssystemen (201, 203) durch einen Zugangspunkt (225) eines lokalen Netzwerks, wobei das Verfahren den folgenden Schritt umfasst:
Anschließen des GPRS-Kommunikationsgerätes (231) an den Zugangspunkt (225) unter Verwendung eines lokalen Netzwerkprotokolls; und weiterhin **dadurch gekennzeichnet ist, dass** es den folgenden Schritt umfasst:
Authentisieren des GPRS-Kommunikationsgerätes (231) mit dem GPRS-Netzwerk (201) und dem lokalen Netzwerk (203) über eine einzige Authentisierungsprozedur, mittels Kommunikation von GPRS-Authentisierungsnachrichten zwischen dem GPRS-Kommunikationsgerät (231) und einem GPRS-Authentisierungselement (215) durch den Zugangspunkt (225), mittels Einkapselung von GPRS-Authentisierungsnachrichten in lokale Netwerk-Authentisierungsnachrichten.

2. Verfahren zur Authentisierung eines GPRS-Kommunikationsgerätes (231) gemäß Anspruch 1, das weiterhin den Schritt einer Autorisierung des Zugangspunktes für GPRS-Kommunikation nur dann umfasst, wenn das GPRS-Kommunikationsgerät (231) durch das GPRS-Authentisierungselement (215) authentisiert ist.

3. Verfahren zur Authentisierung gemäß einem vorhergehenden Anspruch, wobei der Schritt einer Authentisierung den Schritt umfasst, dass der Zugangspunkt (225) eine Identität von dem GPRS-Kommunikationsgerät (231) anfordert.

4. Verfahren zur Authentisierung gemäß Anspruch 2 oder 3, wobei der Schritt einer Authentisierung den Schritt der Übertragung einer Identität an den Zugangspunkt (225) durch das GPRS-Kommunikationsgerät (231) umfasst.

5. Verfahren zur Authentisierung gemäß Anspruch 3 oder 4, wobei die Identität eine GPRS-Teilnehmeridentität umfasst.

6. Verfahren zur Authentisierung gemäß einem vorhergehenden Anspruch, wobei der Schritt einer Authentisierung den Schritt des Kommunizierens einer Zugangsnachricht an das GPRS-Authentisierungselement durch den Zugangspunkt (225) umfasst, die darauf hinweist, dass das GPRS-Kommunikationsgerät (231) an den Zugangspunkt (225) angeschlossen wurde.

7. Verfahren zur Authentisierung gemäß einem vorhergehenden Anspruch, wobei der Schritt einer Authentisierung den Schritt des Kommunizierens einer GPRS-Authentisierungs-Initiierungsnachricht von dem GPRS-Authentisierungselement zu dem Zugangspunkt (225) und den Schritt eines Kommunizierens der in einer lokalen Netzwerk-Authentisierungsnachricht eingekapselten GPRS-Authentisierungs-Initiierungsnachricht von dem Zugangspunkt (225) zu dem GPRS-Kommunikationsgerät (231) umfasst.

8. Verfahren zur Authentisierung gemäß einem vorhergehenden Anspruch, wobei der Schritt einer Authentisierung den Schritt eines Kommunizierens einer in einer lokalen Netzwerk-Authentisierungsnachricht eingekapselten GPRS-Anschluss-Anforderungsnachricht von dem GPRS-Kommunikationsgerät (231) zu dem Zugangspunkt (225) und den Schritt des Kommunizierens der GPRS-Anschluss-Anforderungsnachricht von dem Zugangspunkt (225) zu dem GPRS-Authentisierungselement (215) umfasst.

9. Verfahren zur Authentisierung gemäß einem vorhergehenden Anspruch, wobei der Schritt einer Authentisierung den Schritt eines Abrufens von dem GPRS-Kommunikationsgerät (231) zugeordneten Authentisierungsdaten von einem Standortverzeichnis durch das GPRS-Authentisierungselement (215) umfasst.

10. Verfahren zur Authentisierung gemäß einem vorhergehenden Anspruch, wobei der Schritt einer Authentisierung den Schritt des Kommunizierens einer GPRS-Authentisierungs- und Verschlüsselungs-Anforderungsnachricht von dem GPRS-Authentisierungselement (215) zu dem Zugangspunkt (225) und den Schritt eines Kommunizierens der in einer lokalen Netzwerk-Authentisierungs-Nachricht eingekapselten GPRS-Authentisierungs- und Verschlüsselungs-Anforderungsnachricht von dem Zugangspunkt (225) zu dem GPRS-Kommunikationsgerät (231) umfasst.

11. Verfahren zur Authentisierung gemäß einem vorhergehenden Anspruch, wobei der Schritt einer Authentisierung den Schritt eines Kommunizierens einer in einer lokalen Netzwerk-Authentisierungsnachricht eingekapselten GPRS-Authentisierungs- und Verschlüsselungs-Anforderungsnachricht von dem GPRS-Kommunikationsgerät (231) zu dem Zugangspunkt (225) und den Schritt eines Kommunizierens der GPRS-Authentisierungs- und Verschlüsselungs-Antwortnachricht von dem Zugangspunkt (225) zu dem GPRS-Authentisierungselement (215) umfasst.

12. Verfahren zur Authentisierung gemäß einem vorhergehenden Anspruch, wobei der Schritt einer Authentisierung den Schritt des Kommunizierens einer GPRS-Anschluss-Annahme-Nachricht von dem GPRS-Authentisierungselement (215) zu dem Zugangspunkt (225) und den Schritt des Kommunizierens der in einer lokalen Netzwerk-Authentisierungsnachricht eingekapselten GPRS-Anschluss-Annahme-Nachricht von dem Zugangspunkt (225) zu dem GPRS-Kommunikationsgerät (231) umfasst.

13. Verfahren zur Authentisierung gemäß einem vorhergehenden Anspruch, wobei der Schritt einer Authentisierung den Schritt eines Kommunizierens einer in einer lokalen Netzwerk-Authentisierungsnachricht eingekapselten GPRS-Anschluss-Fertig-Nachricht von dem GPRS-Kommunikationsgerät (231) zu dem Zugangspunkt (225) und den Schritt des Kommunizierens der GPRS-Anschluss-Fertig-Nachricht von dem Zugangspunkt (225) zu dem GPRS-Authentisierungselement (215) umfasst.

14. Verfahren zur Authentisierung gemäß einem vorhergehenden Anspruch, wobei der Schritt einer Authentisierung den Schritt eines Kommunizierens des GPRS-Authentisierungselements (215) mit einem Standortverzeichnis umfasst, um eine GPRS-Ortsaktualisierung auszuführen.

15. Verfahren zur Authentisierung gemäß einem vorhergehenden Anspruch, wobei der Schritt einer Authentisierung den Schritt eines Kommunizierens einer Authentisierung-Erfolgreich-Nachricht von dem GPRS-Authentisierungselement (215) zu dem Zugangspunkt und den Schritt einer Autorisierung des Zugangsportes zur GPRS-Kommunikation für das GPRS-Kommunikationsgerät (231), als Antwort auf den Empfang der Authentisierung-Erfolgreich-Nachricht, umfasst.

16. Verfahren zur Authentisierung gemäß einem vorhergehenden Anspruch, wobei eine Kommunikation von GPRS-Authentisierungsnachrichten von dem GPRS-Authentisierungselement (215) zu dem Zugangspunkt (225) durch Einkapselung von GPRS-Authentisierungsnachrichten in lokale Netzwerk-Authentisierungsnachrichten erfolgt.

17. Verfahren zur Authentisierung gemäß einem vorhergehenden Anspruch, wobei die Authentisierung Teil einer Routing-Bereich-Aktualisierung ist.

18. Verfahren zur Authentisierung gemäß Anspruch 1, wobei der Schritt einer Authentisierung die folgenden Schritte umfasst:
Kommunizieren einer GPRS-Authentisierungs-Initiierungs-Nachricht von dem GPRS-Authentisierungselement (215) zu dem Zugangspunkt (225) und den Schritt eines Kommunizierens der in einer lokalen Netzwerk-Authentisierungs-Nachricht eingekapselten GPRS-Authentisierungs-Initiierungs-Nachricht von dem Zugangspunkt (225) zu dem GPRS-Kommunikationsgerät (231); gefolgt von dem Schritt eines:
Kommunizierens einer in einer lokalen Netzwerk-Authentisierungs-Nachricht eingekapselten GPRS-Anschluss-Anforderungs-Nachricht von dem GPRS-Kommunikationsgerät (231) zu dem Zugangspunkt (225) und dem Schritt eines Kommunizierens der GPRS-Anschluss-Anforderungs-Nachricht von dem Zugangspunkt (225) zu dem GPRS-Authentisierungselement (215); gefolgt von dem Schritt eines:
Kommunizierens einer GPRS-Authentisierungs- und Verschlüsselungs-Anforderungs-Nachricht von dem GPRS-Authentisierungselement (215) zu dem Zugangspunkt (225) und dem Schritt eines Kommunizierens der in einer lokalen Netzwerk-Authentisierungs-Nachricht eingekapselten GPRS-Authentisierungs- und Verschlüsselungs-Anforderungs-Nachricht von dem Zugangspunkt (225) zu dem GPRS-Kommunikationsgerät (231); gefolgt von dem Schritt eines:
Kommunizierens einer in einer lokalen Netzwerk-Authentisierungs-Nachricht eingekapselten GPRS-Authentisierungs- und Verschlüsselungs-Antwort-Nachricht von dem GPRS-Kommunikationsgerät (231) zu dem Zugangspunkt (225) und dem Schritt eines Kommunizierens der GPRS-Authentisierungs- und Verschlüsselungs-Antwort-Nachricht von dem Zugangspunkt (225) zu dem GPRS-Authentisierungselement (215); gefolgt von dem Schritt eines:
Kommunizierens einer GPRS-Anschluss-Annahme-Nachricht von dem GPRS-Authentisierungselement (215) zu dem Zugangspunkt (225) und dem Schritt eines Kommunizierens der in einer lokalen Netzwerk-Authentisierungs-Nachricht eingekapselten GPRS-Anschluss-Annahme-Nachricht von dem Zugangspunkt (225) zu dem GPRS-Kommunikationsgerät (231); gefolgt von dem Schritt eines:
Kommunizierens einer in einer lokalen Netzwerk-Authentisierungs-Nachricht eingekapselten GPRS-Anschluss-Fertig-Nachricht von dem GPRS-Kommunikationsgerät (231) zu dem Zugangspunkt (225) und dem Schritt eines Kommunizierens der GPRS-Anschluss-Fertig-Nachricht von dem Zugangspunkt (225) zu dem GPRS-Authentisierungselement (215); und gefolgt von dem Schritt eines:
Kommunizierens einer Authentisierung-Erfolgreich-Nachricht von dem GPRS-Authentisierungselement (215) zu dem Zugangspunkt (225) und dem Schritt eines Autorisierens des Zugangsportes zur GPRS-Kommunikation als Antwort auf einen Empfang der Authentisierung-Erfolgreich-Nachricht.

19. Verfahren zur Authentisierung gemäß einem vorhergehenden Anspruch, wobei das lokale Netzwerk (203) ein "Wireless Local Area Network" (WLAN) ist.

20. Verfahren zur Authentisierung gemäß Anspruch 15, wobei das "Wireless Local Area Network" (WLAN) den Institute of Electrical and Electronic Engineers standard No. 802.1x erfüllt.

21. Verfahren zur Authentisierung gemäß einem vorhergehenden Anspruch, wobei die lokalen Netzwerk-Authentisierungs-Nachrichten erweiterbare AuthentisierungsNachrichten sind.

22. Verfahren zur Authentisierung gemäß einem vorhergehenden Anspruch, wobei die lokalen Netzwerk-Authentisierungs-Nachrichten erweiterbare Authentisierungs-Protokoll-Nachrichten sind.

23. Verfahren zur Authentisierung gemäß einem vorhergehenden Anspruch, wobei das GPRS-Authentisierungselement (215) ein bedienender GPRS-Unterstützungsknoten (SGSN/Serving GPRS Support Node) ist.

24. Verfahren zur Authentisierung gemäß einem vorhergehenden Anspruch, wobei das GPRS-Kommunikationsgerät (231) ein Kommunikationsgerät mit zwei Betriebsarten ist, das fähig ist, in Übereinstimmung mit einem GPRS-Protokoll und einem lokalen Netzwerk-Protokoll zu kommunizieren.

25. Kommunikationssystem mit einem GPRS-Kommunikations-Netzwerk (201) und einem lokalen Netzwerk (203), wobei das Kommunikationssystem umfasst:
Mittel zum Anschließen eines GPRS-Kommunikationsgerätes (231) an den Zugangspunkt (225) unter Verwendung eines lokalen Netzwerk-Protokolls; und **dadurch gekennzeichnet ist, dass** es weiterhin umfasst:
Mittel zur kombinierten Authentisierung des GPRS-Kommunikationsgerätes (231) mit dem lokalen Netzwerk (203) und dem GPRS-Kommunikations-Netzwerk (201) über eine einzige Authentisierungs-Prozedur, mittels Kommunikation von GPRS-Authentisierungsnachrichten zwischen dem GPRS-Kommunikationsgerät (231) und einem GPRS-Authentisierungselement (215) durch den Zugangspunkt (225), mittels Einkapselung von GPRS-Authentisierungsnachrichten in lokale Netzwerk-Authentisierungsnachrichten.

## Revendications

1. Procédé d'authentification d'une unité de communication GPRS (231) sur des systèmes de communication par réseau GPRS et réseau local (201, 203), via un point d'accès (225) d'un réseau local, le procédé comprenant l'étape selon laquelle :
l'unité de communication GPRS (231) se connecte au point d'accès (225) au moyen d'un protocole de réseau local ; et étant **caractérisé en ce qu'**il comprend, en outre, l'étape consistant à :
authentifier l'unité de communication GPRS (231) avec le réseau GPRS (201) et avec le réseau local (203) au moyen d'une seule procédure d'authentification, grâce à un échange de messages d'authentification GPRS entre l'unité de communication GPRS (231) et un élément d'authentification GPRS (215), via le point d'accès (225), par encapsulation des messages d'authentification GPRS dans des messages d'authentification de réseau local.

2. Procédé d'authentification d'une unité de communication GPRS (231) selon la revendication 1, comprenant, en outre, l'étape d'autorisation du port d'accès pour une communication GRPS uniquement si l'unité de communication GPRS (231) est authentifiée par l'élément d'authentification GPRS (215).

3. Procédé d'authentification selon l'une quelconque des revendications précédentes, dans lequel l'étape d'authentification comprend l'étape selon laquelle le point d'accès (225) demande une identité à l'unité de communication GPRS (231).

4. Procédé d'authentification selon la revendication 2 ou 3, dans lequel l'étape d'authentification comprend l'étape selon laquelle l'unité de communication GPRS (231) transmet une identité au point d'accès (225).

5. Procédé d'authentification selon la revendication 3 ou 4, dans lequel l'identité comprend une identité d'abonné GPRS.

6. Procédé d'authentification selon l'une quelconque des revendications précédentes, dans lequel l'étape d'authentification comprend l'étape selon laquelle le point d'accès (225) communique à l'élément d'authentification GPRS un message d'accès indiquant que l'unité de communication GPRS (231) s'est connectée au point d'accès (225).

7. Procédé d'authentification selon l'une quelconque des revendications précédentes, dans lequel l'étape d'authentification comprend l'étape selon laquelle l'élément d'authentification GPRS communique un message de Démarrage d'Authentification GPRS au point d'accès (225), et l'étape selon laquelle le point d'accès (225) communique à l'unité de communication GPRS (231) le message de Démarrage d'Authentification GPRS encapsulé dans un message d'authentification de réseau local.

8. Procédé d'authentification selon l'une quelconque des revendications précédentes, dans lequel l'étape d'authentification comprend l'étape selon laquelle l'unité de communication GPRS (231) communique au point d'accès (225) un message de Demande de Connexion GPRS encapsulé dans un message d'authentification de réseau local, et l'étape selon laquelle le point d'accès (225) communique le message de Demande de Connexion GPRS à l'élément d'authentification GPRS (215).

9. Procédé d'authentification selon l'une quelconque des revendications précédentes, dans lequel l'étape d'authentification comprend l'étape selon laquelle l'élément d'authentification GPRS (215) récupère des données d'authentification associées à l'unité de communication GPRS (231) auprès d'un Enregistreur de Localisation Nominal.

10. Procédé d'authentification selon l'une quelconque des revendications précédentes, dans lequel l'étape d'authentification comprend l'étape selon laquelle l'élément d'authentification GPRS (215) communique un message de Demande d'Authentification et de Chiffrage GPRS au point d'accès (225), et l'étape selon laquelle le point d'accès (225) communique à l'unité de communication GPRS (231) le message de Demande d'Authentification et de Chiffrage GPRS encapsulé dans un message d'authentification de réseau local.

11. Procédé d'authentification selon l'une quelconque des revendications précédentes, dans lequel l'étape d'authentification comprend l'étape selon laquelle l'unité de communication GPRS (231) communique au point d'accès (225) un message de Réponse d'Authentification et de Chiffrage GPRS encapsulé dans un message d'authentification de réseau local, et l'étape selon laquelle le point d'accès (225) communique le message de Réponse d'Authentification et de Chiffrage GPRS à l'élément d'authentification GPRS (215).

12. Procédé d'authentification selon l'une quelconque des revendications précédentes, dans lequel l'étape d'authentification comprend l'étape selon laquelle l'élément d'authentification GPRS (215) communique un message d'Acceptation de Connexion GPRS au point d'accès (225), et l'étape selon laquelle le point d'accès (225) communique à l'unité de communication GPRS (231) le message d'Acceptation de Connexion GPRS encapsulé dans un message d'authentification de réseau local.

13. Procédé d'authentification selon l'une quelconque des revendications précédentes, dans lequel l'étape d'authentification comprend l'étape selon laquelle l'unité de communication GPRS (231) communique au point d'accès (225) un message d'Etablissement de Connexion GPRS encapsulé dans un message d'authentification de réseau local, et l'étape selon laquelle le point d'accès (225) communique le message d'Etablissement de Connexion GPRS à l'élément d'authentification GPRS (215).

14. Procédé d'authentification selon l'une quelconque des revendications précédentes, dans lequel l'étape d'authentification comprend l'étape selon laquelle l'élément d'authentification GPRS (215) communique avec un Enregistreur de Localisation Nominal pour effectuer une mise à jour de localisation GPRS.

15. Procédé d'authentification selon l'une quelconque des revendications précédentes, dans lequel l'étape d'authentification comprend l'étape selon laquelle l'élément d'authentification GPRS (215) communique un message de succès d'authentification au point d'accès, et l'étape d'autorisation du port d'accès pour une communication GPRS pour l'unité de communication GPRS (231) en réponse à la réception du message de succès d'authentification.

16. Procédé d'authentification selon l'une quelconque des revendications précédentes, dans lequel la communication de messages d'authentification GPRS de l'élément d'authentification GPRS (215) au point d'accès (225) se fait par encapsulation des messages d'authentification GPRS dans des messages d'authentification de réseau local.

17. Procédé d'authentification selon l'une quelconque des revendications précédentes, dans lequel l'authentification fait partie d'une mise à jour d'une zone de routage.

18. Procédé d'authentification selon la revendication 1, dans lequel l'étape d'authentification comprend :
l'étape selon laquelle l'élément d'authentification GPRS (215) communique un message de Démarrage d'Authentification GPRS au point d'accès (225), et l'étape selon laquelle le point d'accès (225) communique à l'unité de communication GPRS (231) le message de Démarrage d'Authentification GPRS encapsulé dans un message d'authentification de réseau local ; suivies par :
l'étape selon laquelle l'unité de communication GPRS (231) communique au point d'accès (225) un message de Demande de Connexion GPRS encapsulé dans un message d'authentification de réseau local, et l'étape selon laquelle le point d'accès (225) communique le message de Demande de Connexion GPRS à l'élément d'authentification GPRS (215) ; suivies par :
l'étape selon laquelle l'élément d'authentification GPRS (215) communique un message de Demande d'Authentification et de Chiffrage GPRS au point d'accès (225), et l'étape selon laquelle le point d'accès (225) communique à l'unité de communication GPRS (231) le message de Demande d'Authentification et de Chiffrage GPRS encapsulé dans un message d'authentification de réseau local ; suivies par :
l'étape selon laquelle l'unité de communication GPRS (231) communique au point d'accès (225) un message de Réponse d'Authentification et de Chiffrage GPRS encapsulé dans un message d'authentification de réseau local, et l'étape selon laquelle le point d'accès (225) communique le message de Réponse d'Authentification et de Chiffrage GPRS à l'élément d'authentification GPRS (215) ; suivies par :
l'étape selon laquelle l'élément d'authentification GPRS (215) communique un message d'Acceptation de Connexion GPRS au point d'accès (225), et l'étape selon laquelle le point d'accès (225) communique à l'unité de communication GPRS (231) le message d'Acceptation de Connexion GPRS encapsulé dans un message d'authentification de réseau local ; suivies par :
l'étape selon laquelle l'unité de communication GPRS (231) communique au point d'accès (225) un message d'Etablissement de Connexion GPRS encapsulé dans un message d'authentification de réseau local, et l'étape selon laquelle le point d'accès (225) communique le message d'Etablissement de Connexion GPRS à l'élément d'authentification GPRS (215) ; et suivies par :
l'étape selon laquelle l'élément d'authentification GPRS (215) communique un message de succès d'authentification au point d'accès (225), et l'étape d'autorisation du port d'accès pour une communication GPRS en réponse à la réception du message de succès d'authentification.

19. Procédé d'authentification selon l'une quelconque des revendications précédentes, dans lequel le réseau local (203) est un Réseau Local Sans Fil (WLAN).

20. Procédé d'authentification selon la revendication 15, dans lequel le Réseau Local Sans Fil (WLAN) est conforme à la norme 802.1x de l'Institut des Ingénieurs Electroniciens et Electriciens (IEEE).

21. Procédé d'authentification selon l'une quelconque des revendications précédentes, dans lequel les messages d'authentification de réseau local sont des messages d'authentification extensibles.

22. Procédé d'authentification selon l'une quelconque des revendications précédentes, dans lequel les messages d'authentification de réseau local sont des messages de Protocole d'Authentification Extensible.

23. Procédé d'authentification selon l'une quelconque des revendications précédentes, dans lequel l'élément d'authentification GPRS (215) est un Noeud de Support GPRS de Service (SGSN).

24. Procédé d'authentification selon l'une quelconque des revendications précédentes, dans lequel l'unité de communication GPRS (231) est une unité de communication double-mode, pouvant communiquer selon un protocole GPRS et selon un protocole de réseau local.

25. Système de communication comprenant un réseau de communication GPRS (201) et un réseau local (203), le système de communication comprenant :
des moyens permettant à une unité de communication GPRS (231) de se connecter au point d'accès (225) au moyen d'un protocole de réseau local ; et étant **caractérisé en ce qu'**il comprend, en outre :
des moyens permettant une authentification combinée de l'unité de communication GPRS (231) avec le réseau local (203) et avec le réseau de communication GPRS (201) au moyen d'une seule procédure d'authentification, grâce à un échange de messages d'authentification GPRS entre l'unité de communication GPRS (231) et un élément d'authentification GPRS (215), via le point d'accès (225), par encapsulation des messages d'authentification GPRS dans des messages d'authentification de réseau local.
